# EUROPEAN PATENT APPLICATION

(11) **EP 4 468 489 A1**
(43) Date of publication of application: **27.11.2024**
(21) Application number: 23174574.6
(22) Date of filing: 22.05.2023
(51) Int. Cl.: H01M 50/308, H01M 50/317, H01M 50/325, H01M 50/375, H01M 50/30, H01M 10/42, F16K 17/00, F16K 24/00

(54) **LEAK TESTING ARRANGEMENT AND VENTILATION DEVICE FOR A BATTERY SYSTEM**

(71) Applicant: Newfrey LLC, New Britain, CT 06053 (US)
(72) Inventor: STAU, Bastian, 35394 Gießen (DE); SCHNEIDER, Stefan, 35394 Gießen (DE)
(74) Representative: SBD IPAdmin

(57) **Abstract**

Leak testing arrangement comprising a ventilation device and ventilation device 12) for a battery system with a battery casing having a vent opening, comprising:
- a housing (20) adapted to be attached to the battery casing, the housing comprising a flange (26) delimiting a central opening (28) and a wall (30) laterally extending from the flange,
- a cap (22) assembled to the housing, the cap having a first surface and a second surface, opposite the first surface, the second surface facing the central opening of the housing,
- a gas permeable sheet (24) installed on the cap and adapted to extend over the central opening,
wherein the cap (22) is movably assembled to the housing (20) between a closed position and an open position, and the wall of the housing (20) comprises a fixation element (40) adapted to receive removably a leak testing device (42).

## Description

The present invention relates to a ventilation device for a battery, and particularly to a venting device for a casing of a battery submodule, battery module or battery system that is configured for being integrated in that casing. More particularly, the present invention relates to a device for equalizing the internal pressure of a housing, in particular a battery housing of a motor vehicle, with the ambient pressure of the housing. Furthermore, the present invention is directed to a leak testing arrangement comprising a leak testing device and a ventilation device, the leak testing arrangement being used for example for an end-of line testing of a sealed battery subassembly (for instance a battery module or a battery pack).

Batteries usually have several battery modules, each of which is equipped with a plurality of electrochemical storage cells. These battery modules are housed in a casing.

In casings of battery systems, in particular high-voltage battery system, such as those used in motor vehicles, temperature and pressure changes result in pressure differences between the housing of the battery system and the environment.

These pressure differences must be balanced in normal operation. To provide thermal control of the enclosed components a thermal management system may be used to efficiently emit, discharge and/or dissipate heat generated within the casing. If such thermal management system is omitted or the heat drain from the casing is not sufficiently performed, an increase of the internal temperature can lead to abnormal reactions occurring therein.

The pressure equalization is often realized with a ventilation device (also called a degassing valve). In a known manner, such ventilation device comprises a housing adapted to be inserted in a battery casing vent opening and a valve which can be for instance a diaphragm.

Besides, battery casings need to be sealed against the ingress of liquids, especially water, from the outside. Indeed, a collection of liquids or fluids inside the battery casing is problematic because these can lead to corrosion and/or short-circuits. Moreover, condensation fluid can start moving while the motor vehicle is in motion and thus comes into contact with electronically sensitive points within the battery.

However, due to penetrations of connectors and/or coolant lines and due to venting openings, which relieve any excess pressure created when individual cells burst, a battery casing cannot be designed completely leak-proof.

In order to avoid those drawbacks, several devices exist to provide adsorption and/or absorption of penetrating water and forming condensation water.

US10557561 B2 discloses a pressure-compensation device for a housing comprising: an inner side; an outer side; and a lattice-like cage having a gas opening, wherein the gas opening connects the inner side and the outer side in a flow-conducting manner and is restricted, in a through-flow direction of the gas opening, by an inner edge and an outer edge, wherein the gas opening is covered by a gas-permeable membrane.

US2021396324A1 discloses a ventilation component to be attached to a housing at a ventilation opening of the housing, comprising a gas-permeable membrane; a ventilation valve that includes an elastic body, and that is opened and closed by elastic deformation of the elastic body; and a structural member that supports the gas-permeable membrane and the ventilation valve. When the ventilation component is attached to the housing, ventilation between an inside of the housing and an outside of the housing is carried out via the gas-permeable membrane. When a difference between a pressure inside the housing and a pressure outside the housing is equal to or higher than a predetermined value, the ventilation valve is opened to discharge a gas inside the housing to the outside of the housing.

Once the ventilation device has been mounted on a casing of a battery sub-assembly, and the battery sub-assembly has been finalized and form a sealed battery sub-assembly, there is still a need to test the performance of the vent, but also leak testing the battery sub-assembly.

Conventionally, in the manufacturing process of a sealed battery sub-assembly, the hermeticity of a battery casing is inspected for the purpose of preventing moisture from penetrating into the battery container and deteriorating battery performance, or the like. At this time, in the manufacturing process of the sealed battery sub-assembly, a detection gas (for example, helium or the like) is introduced into the battery container beforehand to check whether the detection gas leaks from the battery container. Other leak testing methods can also be used like a pressure decay leak testing.

For leak-testing the assembly, it is known to use a hole in the battery sub-assembly and introduce a detection gas into the casing of the battery sub-assembly. It is also known to mount the ventilation device after a leak-testing process. This increases the manufacturing time.

It is an object of the present invention to provide a ventilation device for a battery sub-assembly which enable a differential pressure compensation of a sealed battery sub-assembly in a normal work environment, emergency venting in the event of a thermal runaway occurring inside the casing of the battery sub-assembly and which can be used at the end of the manufacturing process for an end-of-line leak testing.

Accordingly, the present disclosure is directed to a ventilation device for a battery with a battery casing having a vent opening according to claim 1 and to a leak testing arrangement according to claim 12.

More particularly, the present invention is directed to a ventilation device for a battery system with a battery casing having a vent opening, comprising:
- a housing adapted to be attached to the battery casing, the housing comprising a flange delimiting a central opening and a wall laterally extending from the flange,
- a cap assembled to the housing, the cap having a first surface and a second surface, opposite the first surface, the second surface facing the central opening of the housing,
- a gas permeable sheet installed on the cap and adapted to extend over the central opening,

Wherein the cap is movably assembled to the housing between a closed position and an open position, and the wall of the housing comprises a fixation element adapted to receive removably a leak testing device.

The gas permeable sheet allows the required volume flow to ensure pressure equalization between the inside and the outside of the casing. In a normal work environment, the cap is in the closed position and in case of a thermal runaway, the pressure inside the battery casing can force the cap to move to its open position to ensure an emergency venting. The fixation element adapted to receive removably a leak testing device are directly integrated to the housing of the ventilation device, such that no further parts are necessary and the position on the wall of the housing are not cumbersome in a normal work environment and allows, for the purpose of the testing a direct proximity between the different elements of the ventilation device and the leak testing device.

In an embodiment, the cap can be moved from the closed position to the open position and back to the closed position. Thus, the ventilation device can be reset in an "operative position", once the pressure inside the casing has been released.

In an embodiment, the ventilation device further comprises a protective lid connected to the cap. The protective lid protects the permeable membrane from damage during delivery, installation and operation of the ventilation device.

In an embodiment, the flange is a circular flange and the wall is a first circular wall extending from a first side of the flange, wherein the housing comprises mounting means extending from a second side of the flange, opposite the first side of the flange and adapted to cooperate with the battery casing. The flange realises a physical barrier between the operative part of the ventilation device, extending from the first side of the flange and the assembly part extending from the second side of the flange.

In an embodiment, a collet extends from the second side of the flange, the collet being adapted to be arranged in the vent opening of the battery casing. The collet allows an easy centring of the ventilation device within the vent opening.

In an embodiment, the cap is snap fitted into the wall of the housing in the open position and in the closed position, and wherein the open position and closed position are two stable positions. The snap fit connection is easy to realise. The forces can be adjusted to the need of the ventilation device. The two stable position allows a reversible use of the ventilation device.

In an embodiment, the cap comprises at least two hooks and the wall of the housing comprises at least two recesses, each recess being adapted to receive one hook in two stable positions. In another embodiment, the cap comprises three hooks, and each hook is adapted to cooperate with a recess arranged in the wall. The hooks are designed in such a way that the cap can move from the closed position to the open position if an internal pressure inside the casing exceed a predetermined value. The motion in the open position of the cap allows releasing inside pressure.

In an embodiment, the cap comprises positioning tabs extending from the second surface of the cap within the central opening. The positioning tabs allow a faster assembly of the device.

In an embodiment, the cap has a circular shape with a central recess in which reinforcing ribs are arranged, the circular recess is delimited on the first surface by a holding section, and wherein the gas permeable sheet is fixed to the holding section. The ribs increase the stiffness of the cap but also reduces the surface of the gas permeable sheet exposed to the inside of the casing. This reduced cross-section enables a delay in the temperature rise from the inside of the casing to the gas permeable sheet and also protects said gas permeable sheet from a direct exposure to a flame.

In an embodiment, a casing seal is provided around the housing for its airtight attachment to the battery casing. More particularly, the casing seal is provided on the first surface of the flange around the collet.

In an embodiment, a cap seal is provided around the cap for its airtight attachment to the housing, and wherein the cap comprises a groove in which the cap seal is arranged. In order for the ventilation device to withstand high temperatures for a prescribed period of time, as well as direct flame, temperature-sensitive areas are protected by the geometry of the ventilation of the device. In particular, the seals are temperature-sensitive elements.

In an embodiment, the wall of the housing comprises a plurality of apertures. Thus, when the cap moves from the closed position to the open position, it opens the plurality of aperture on the wall allowing a quicker pressure release.

The present disclosure is also directed to a leak testing arrangement comprising a ventilation device as described above and a leak testing device, wherein the leak testing device is removably fixed to the wall of the ventilation device, and wherein in the fixed position of the leak testing device, the leak testing device is fixed in an airtight manner to the ventilation device. The presence of the fixation element directly on the housing of the ventilation valve allows a quick connection and release of the leak testing device to and from the ventilation device.

In an embodiment, the leak testing device is fixed by rotation to the housing. In an embodiment, the leak testing device comprises a seal which is compressed on the first surface of the flange during the fixation by rotation of the leak testing device to the ventilation device.

In an embodiment, the leak testing device comprises at least one tongue adapted to cooperate with the ventilation device such as to move the cap from the closed position to the open position. Thus the leak testing device can mechanically move the cap from its closed position to its open position in order to realise a leak testing process.

In an embodiment, the cap is provided with a protective lid, the protective lid having at least one opening, and wherein the at least one tongue cooperates with the at least one opening. Thus, there is no need to remove the protective lid to command the opening (or closing) of the cap.

A specific embodiment of the present invention will now be described, by way of example only and with reference to the accompanying drawings, of which:
Fig. 1 is a schematic perspective view of a battery system with a ventilation device according to the invention;
Fig. 2 is a schematic explosion view of the ventilation device according to the invention;
Fig. 3 is a perspective bottom view of the ventilation device of Fig. 2;
Fig. 4 is a perspective front view of the ventilation device of Fig. 2;
Fig. 5A and Fig. 5B show cross-sectional views of the ventilation device with the cap in the closed position (Fig. 5A) and the cap in the open position (Fig. 5B);
Fig. 6 shows a perspective view of a leak testing arrangement with the ventilation device of Fig. 2 and a leak testing device.

On the different figures, the same reference signs designate identical or similar elements.

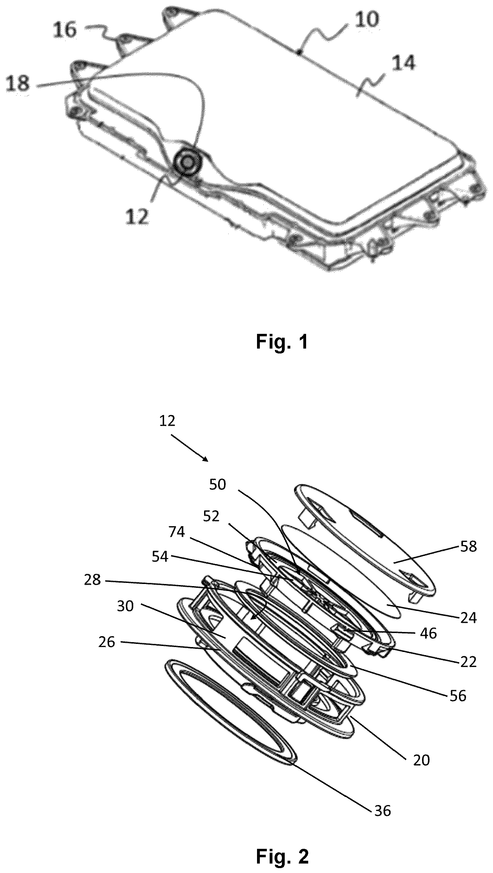

Fig. 1 illustrates a schematic perspective view of a battery system 10 with a ventilation device 12. The shape of the battery system 10 and the arrangement in Fig. 1 is for illustration purpose. The battery system 10 comprises a casing 14. In the context of the present application, a battery system 10 is to be understood as one of a battery sub-assembly, a battery submodule, a battery module and a battery pack. Hence the battery casing 14 is to be understood to be a casing of one of a battery submodule, a battery module and a battery system. The casing 14 may consist of a metal alloy and/or a plastic material.

The battery system 10 may comprise a plurality of attachment portions 16 for mounting the battery system to a fixing structure, for example an electric vehicle. The casing 14 comprises a vent opening 18. More particularly, the casing may comprise 2 or 3 vent openings. Eventually more than 3 vent openings may also be provided.

The vent opening 18 is adapted to receive the ventilation device 12. The ventilation device 12 is more particularly shown in Fig. 2 to Fig. 5B. The ventilation device 12 is configured to be inserted into the vent opening 18.

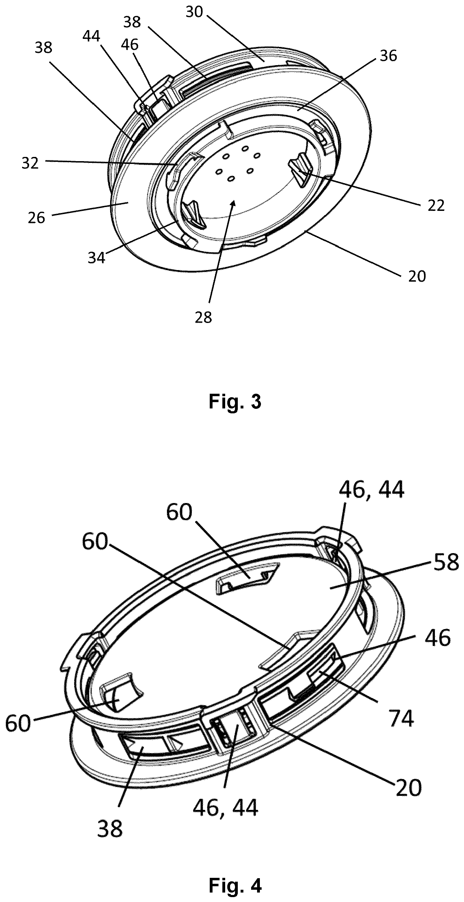

As depicted in Fig. 2, the ventilation device 12 comprises a housing 20, a cap 22 and a gas permeable sheet (or membrane) 24. The housing 20 is adapted to be attached to the battery casing 14. The housing 20 comprising a flange 26 delimiting a central opening 28 and a wall 30 laterally extending from the flange 26. The flange 26 may be, as depicted on Fig. 2 a circular flange delimiting a circular central opening 28. The flange 26 comprises a first side and the wall 30 extends from the first side of the flange 26. The wall 30 does not extend at the edge of the flange delimiting the central opening 28. The wall 30 extends at a non-zero distance from the edge of the flange delimiting the central opening. In a similar way, the wall 30 does not extend from the outer edge of the flange, but extends at a non-zero distance from the outer edge of the flange 26. The wall 30 is orthogonal to the plane formed by the flange. The flange 26 comprises a second side, opposite the first side from which mounting means 32 extends. The mounting means 32 are for instance a blocking portion to mount the housing in the vent opening 18. The mounting means 32 are adapted to cooperate with the battery casing 14, and more particularly with a surface of the battery casing delimiting the opening vent in order to fixedly connect the ventilation 12 device to the casing 14. As better seen in Fig. 3, a collet 34 extends from the second side of the flange 26 and the mounting means 32 may be elastic lashes. A housing seal 36 may be arranged around the collet on the second side of the flange in order to sealingly fix the housing to the casing 14.

The wall 30 may have a circular cross-section and form a cylindrical body. The wall 30 is provided with a plurality of apertures 38. The apertures 38 may be evenly distributed on the circumference of the wall. The apertures are windows. The wall 30 comprises a fixation element 40 adapted to cooperate with a leak testing device 42 as described below. The wall 30 further comprises recesses 44, more particularly at least two recesses. In the embodiment depicted in the Figures, the wall 30 comprises three recesses. The recesses 44 are used to connect the cap 22 to the housing 20.

The cap 22 is assembled to the housing 20. More particularly the cap 22 can be snap-fitted to the housing 20. The cap 22 is movably assembled to the housing between a first position and a second position. The first position is for instance a closed position and the second position is an open position. The cap 22 can move from the closed position to the open position and vice-versa from the open position to the closed position.

The cap 22 comprises a first surface and a second surface opposite the first surface. The second surface faces the flange 26 of the housing 20. At least two hooks 46, and more particularly three hooks 46 extend from the second surface. The hooks 46 are adapted to cooperate with the recesses of the housing to connect the cap 22 to the housing 20 in the open position and in the closed position. The open position and the closed position of the cap are two stable positions. The cap 22 comprises positioning tabs 48 extending from the second surface. The positioning tabs 48 are used for the connection of the cap 22 to the housing 20 and for centring the cap with regard to the housing. The positioning tabs 48 are adapted to extend in the central opening 28. The cap 22 can have a circular shape. The cap 22 is provided with a central recess 50. The central recess 50 is delimited on the first surface by a holding section 52. Reinforcing ribs 54 are arranged in the central recess 50. The reinforcing ribs 54 extends from the edge of the holding section toward the centre of the central recess 50. The holding section is arranged on the first surface of the cap 22.

The holding section 52 forms a support surface for the gas permeable sheet 24. The gas permeable sheet 24 can be ultrasonically welded to the holding section. The gas permeable sheet 24 is a breathable membrane. The gas permeable sheet 24 is for instance made of Polyethylene terephthalate (PET) or Polytetrafluoroethylene (PTFE) material. The gas permeable sheet 24 has a disc shape adapted to cover entirely the central recess 50. The central recess 50 is for instance circular and may have a diameter smaller than the diameter of the central opening. In any case, the edge of the cap 22 extends beyond the edge of the central opening, such that the cap 22 covers entirely the central opening 28.

As better seen in Fig. 3, a cap seal 56 may be provided on the second surface of the cap 22 in order to tightly fix the cap 22 to the housing 20 when the cap is in the closed position. The cap seal 56 extends around the positioning tabs 48 and is adapted to rest again a support surface of the flange 26. The support surface of the flange 26 is arranged between the edge of the flange delimiting the central opening and the wall 30.

As visible in Fig. 3 and fig. 4, a protective lid 58 may be provided above the cap 22 in order to protect the gas permeable sheet 24. The protective lid 58 is for instance snap-fitted to the outer edge of the cap 22. The protective lid 58 may comprise at least one opening 60 (Fig. 3 shows three openings 60) adapted to cooperate with a leak testing device 42.

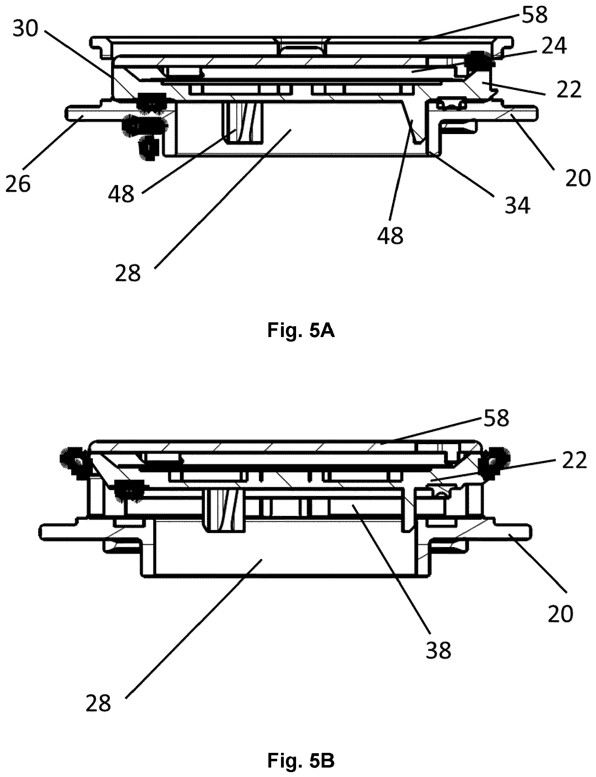

Fig. 5A and Fig. 5B show the ventilation device 12 with the cap 22 in the closed position and the cap 22 in the open position. As shown in Fig. 5A, in the closed position, the cap 22 rests against the flange 26. More particularly, the cap 22 rests against the first side of the flange 26. The cap 22 rests against the support surface of the flange 26. The central opening 28 is entirely covered. The cap 22 and the protective lid 58 are within a recess formed by the wall 30 (in other words, the cap and the protective lid do not protrude from the outer edge of the wall). The hooks 46 of the cap cooperate with the recesses 44 within the wall 30 in a first position, so that the closed position is a stable position. The plurality of apertures 38 within the wall are obstructed by the cap 22. Upon a particular force (it can be a pressure or a mechanical force such that of a tab pushing the cap away from the housing), the snap-fit connection maintaining the closed position of the cap between the hook and the recess can be released, so that the cap 22 is elevated from the flange 26 and moves along a longitudinal axis up to a second position of the hook within the recess 44 which corresponds to the stable open position. In the open position of the cap 22, as shown in Fig. 5B, the plurality of apertures 38 in the wall are not obstructed anymore by the cap and are open to allow a release of a pressure, for instance. The protective lid 58 and eventually a portion of the cap 22 can protrude from the outer edge of the wall 30. To move back the cap 22 in the closed position, an operator can push the cap 22 toward the housing 20 such that the hooks 46 re-engage the recesses 44 in the first position. The closed and open positions of the cap 22 may be realised by cooperation of the hooks with lugs extending in the recesses 44. For instance in each recess one hook 48 can cooperate at two different levels with a lug which block the hook in the first or the second position.

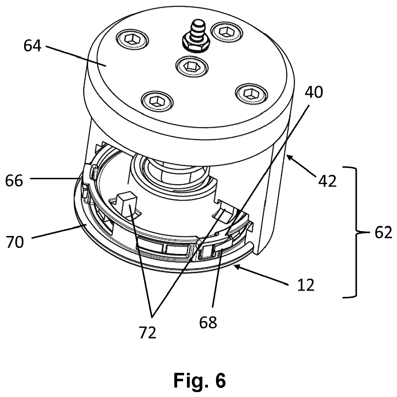

Fig. 6 shows a leak testing arrangement 62 with a leak testing device 42 and the ventilation device 12. The leak testing device 42 is for instance adapted to introduce a detection gas (for example, helium or the like) into the battery casing 14 (a sealed battery casing) through the ventilation device 12. The leak testing device 42 can comprise a cylindrical body with a first end 64 and a second end 66 adapted to cooperate with the ventilation device 12. The second end 66 is adapted to cooperates with the fixation element 40 on the wall 30 of the flange 20. For instance, the fixation element 40 is a groove or a slope provided on the wall which cooperates with a wedge 68 provided on the second end of the leak testing device 42.

The leak testing device 42 can be fixed to the ventilation device 12 by rotation. When turning the cylindrical body, the wedge 68 can engage the groove or slope. A bayonet connection can be formed. A leak seal 70 is provided at the second end of the leak testing device. The leak seal 70 contacts a surface of the flange 26 arranged between the wall 30 and its outer edge. The leak seal 70 can be compressed upon rotation of the leak testing device 42 such that an air-tight connection between the leak testing device 42 and the housing 20 is realized. The second end 66 of the leak testing device 42 may also have at least one tongue 72 (as shown, the leak testing device has three tongues 72). The tongue 72 is adapted to go through the opening 60 of the protective lid 58. The outer edge of the cap 22 also comprises apertures 74 as depicted in the Fig. 1 (or at least one aperture, for instance three apertures) adapted to cooperate with the leak testing device tongues 72 such that the tongues 72 can pass through the apertures 74 and apply a force on the cap 22 to force the cap 22 to move from the closed position to the open position. When the leak testing device 42 is installed (or placed) but not yet fixed to the ventilation device 12, the tongues 72 may be visible. When the leak testing device 42 is installed and fixed to the ventilation device 12, the tongues 72 can be engaged in the apertures 74.

## Claims

1. Ventilation device (12) for a battery system with a battery casing having a vent opening, comprising:
- a housing (20) adapted to be attached to the battery casing, the housing comprising a flange (26) delimiting a central opening (28) and a wall (30) laterally extending from the flange,
- a cap (22) assembled to the housing, the cap having a first surface and a second surface, opposite the first surface, the second surface facing the central opening of the housing,
- a gas permeable sheet (24) installed on the cap and adapted to extend over the central opening,
**Characterized in that** the cap (22) is movably assembled to the housing (20) between a closed position and an open position, and the wall of the housing (20) comprises a fixation element (40) adapted to receive removably a leak testing device (42).

2. Ventilation device (12) according to claim 1, further comprising a protective lid (58) connected to the cap (22).

3. Ventilation device (12) according to claim 1 or 2, wherein the flange (26) is a circular flange and the wall is a circular wall extending from a first side of the flange, wherein the housing comprises mounting means extending from a second side of the flange, opposite the first side of the flange and adapted to cooperate with the battery casing.

4. Ventilation device (12) according to claim 3, wherein a collet (34) extends from the second side of the flange, the collet being adapted to be arranged in the vent opening of the battery casing.

5. Ventilation device (12) according to any of claims 1 to 4, wherein the cap (22) is snap-fitted into the wall (30) of the housing in the open position and in the closed position, and wherein the open position and closed position are two stable positions.

6. Ventilation device (12) according to any of claims 1 to 5, wherein the cap (22) comprises at least two hooks (46) and the wall (30) of the housing comprises at least two recesses (44), each recess being adapted to receive one hook in two stable positions.

7. Ventilation device (12) according to any of claims 1 to 6, wherein the cap comprises positioning tabs (48) extending from the second surface of the cap within the central opening.

8. Ventilation device (12) according to any of claims 1 to 7, wherein the cap (22) has a circular shape with a central recess (50) in which reinforcing ribs (54) are arranged, the circular recess is delimited on the first surface by a holding section, and wherein the gas permeable sheet is fixed to the holding section.

9. Ventilation device (12) according to any of claims 1 to 8, wherein a housing seal (36) is provided around the housing for its airtight attachment to the battery casing (14).

10. Ventilation device (12) according to any of claims 1 to 9, wherein a cap seal is provided around the cap for its airtight attachment to the housing, and wherein the cap comprises a groove in which the cap seal is arranged.

11. Ventilation device (12) according to any of claims 1 to 10, wherein the wall of the housing comprises a plurality of apertures (38).

12. Leak testing arrangement comprising a ventilation device (12) according to any of claims 1 to 11 and a leak testing device, wherein the leak testing device (42) is removably fixed to the wall of the ventilation device, and wherein in the fixed position of the leak testing device, the leak testing device is fixed in an airtight manner to the ventilation device.

13. Leak testing arrangement according to claim 12, wherein the leak testing device (42) is fixed by rotation to the housing (20).

14. Leak testing arrangement according to claim 12 or 13, wherein the leak testing device comprises at least one tongue (72) adapted to cooperate with the ventilation device such as to move the cap from the closed position to the open position.

15. Leak testing arrangement according to claim 14, wherein the cap (22) is provided with a protective lid (58), the protective lid (58) having at least one opening, and wherein the at least one tongue (72) cooperates with the at least one opening.
